# EUROPEAN PATENT SPECIFICATION

(11) **EP 1 941 202 B1**
(45) Date of publication and mention of the grant of the patent: **23.02.2011**
(21) Application number: 06807512.6
(22) Date of filing: 24.10.2006
(51) Int. Cl.: F16L 39/06, F16L 59/18

(54) **CRYOGENIC SWIVEL**
KRYODREHGELENK
PIVOT CRYOGENIQUE

(30) Priority: 25.10.2005 EP 05109976
(43) Date of publication of application: 09.07.2008
(73) Proprietor: Single Buoy Moorings Inc., 1723 Marly (CH)
(72) Inventor: QUEAU, Jean-Pierre, F-06000 Nice (FR); POLLACK, Jack, Houston, TX 77079 (US); MENARDO, Phillipe Albert Christian, 06300 Nice (FR)
(74) Representative: van Westenbrugge, Andries
(86) International application number: PCT/EP2006/067718
(87) International publication number: WO 2007/048791

(56) References cited:
- EP-A- 0 864 797
- WO-A-2004/033950
- US-A- 4 065 159
- US-A1- 2002 043 800
- US-A1- 2002 066 728

## Description

This invention is regarding an enhanced design for a weathervaning offshore cold fluid (LNG, LPG) transfer system which includes at least one cryogenic toroidal swivel that has a design that reduces deformations resulting from low temperature cryogenic fluids.

The low pressure cryogenic toroidal fluid swivel consists out of an outer ring-shaped part which rotates about an inner ring-shaped part. The two structures form an annular chamber between them for the distribution and transfer of cryogenic fluids, which chamber is sealed by multiple ring seals between the two swivel parts, above and below the chamber.

One swivel ring is provided with an inlet for fluids while the other ring incorporates an outlet. Both inlet and outlet are placed in the same horizontal plane.

The cryogenic toroidal swivel will normally function at less than 50 bar; the operating pressure will be less than 30 bar, preferable around 20 bar.

The external swivel part is connected to the inner swivel part via an L-shaped bush bearing or via slide pads or rings. Alternatively an isolated cryogenic roller bearing can be used as well.

The contraction or expansion of swivel parts is relatively high during the start - up and stopping of the LNG transfer process and is created by the wide thermal gradient which varies from ambient to - 163 degrees Celsius for LNG, and is also created by the pressure differences which occur during these operations. Especially if for example LNG is not filling the chamber completely and just fills the bottom part of the chamber, there will be a large temperature difference between the lower and upper part of the toroidal swivel. Also the inlet and outlets can be seen as disruptions of the circular continuity of the swivel parts and will therefore create specific deformations during the start up and operating conditions for the same reasons.

Controlling these temperature related deformations of the swivel parts is especially essential in the area of the seals, as at all times leakage of LNG over the swivels due to deformation of swivel parts, needs to be avoided as LNG is a very lightly inflammable and therefore dangerous product. The swivel deformations need to be minimized and the geometry of the seal groove needs to be as precise and constant as possible at all times to ensure the highest performance of the seals.

A cryogenic swired according to the preamble of claim 1 is disclosed in US 2002/0043800 A1.

To reduce local swivel part deformations and large internal tensions due to temperature differences during the start-up or stopping of the LNG transfer process, the walls of the swivel parts are made relatively thin as compared to standard high pressure toroidal swivels which are commonly used for the transfer of warm hydrocarbons. These thick wall designs are not suitable for cryogenic fluids as they have a relative long cooling down period and will face large internal deformations due to local temperature differences in the swivel. The use of relative thin walls in this new cryogenic swivel design results therefore in a quick balancing out of temperature differences within parts of the cryogenic swivel and ensures a quick distribution of new temperatures over the whole swivel, during start-up or stopping the LNG transfer operations.

These objectives are achieved by means of a cryogenic swivel according to claim 1.

The cryogenic toroidal swivel according to the invention consists of a swivel part which forms a relative large part of the chamber wall (C shaped chamber swivel part) and one swivel part that forms a relative small part of the chamber wall. According to the invention, the swivel part with the C- shaped chamber is provided with fixed vertical temperature bridges as fixed conducting elements connecting the lower and upper product seal areas of that swivel part. These temperature bridges can have any form or shape but are preferable in the form a solid bars which are equally spaced within the C-shaped chamber. These structures will help to equalize temperature differences between the swivel parts and can handle internal forces created by contraction and expansion created by the temperature changes, so the various swivel parts will have a better relative isotropic behaviour. Alternatively the toroidal chamber can also be formed by two swivel parts that both have more or less equally shaped chamber parts, each chamber part provided with these bars acting like thermal bridges. If there were no bars the C-shaped chamber would contract during lowering of the temperature and tend to "close" and buckle and by that create a displacement of the seal grove so that the seals can not properly function anymore. By adding these temperature bridges the contraction of the seal grove area is stabilized and controlled.

The bars are preferably made of the same material as the swivel part in which they are placed, for example made from stainless steel grade 360 or 304. The thermal bridges can be made as part of the swivel part during a casting process or can be added in a later phase after the swivel part and seal area's are properly machined, for example by welding.

The two product seals are preferably of the face seal type and placed in a horizontal plane one after the other. This seal configuration ensures a proper functioning of the seals when the swivel parts are deforming in a radial direction due to temperature changes.

The shape of the inlet leads from a circular pipe shape into an oblong or oval shape within the swivel part where it is attached to so to avoid sharp corners and the use of very thick wall parts locally which could create deformations and tensions due to the large temperature differences.

The cryogenic swivel can be provided with more than one inlet and/or outlet (not shown). The advantage of multiple inlets/outlets is that the swivel height can be reduced and by that the length of the temperature bridges in the chamber, which makes them more effective during start up or stopping of the LNG transfer process. A compact swivel design supports a quicker cooling down of the swivel in general and makes it less sensitive for environmental conditions like winds or rain from a certain direction acting on one side of the swivel.

An other important advantage of a swivel with multiple inlets and/or outlets, is that the thermal gradient is also improved during the start up process as for example the swivel is cooled down in more places at the same time by the cold fluid coming from the multiple inlets.

The new design results in a better relative isotropic behaviour of the various swivel parts and by that ensures a correct sealing. Further the swivel weight, size and fabrication costs are clearly reduced with this new design, especially compared with prior art swivel designs.

Some embodiments of a cryogenic swivel in accordance with the present invention will be explained in detail with reference to the accompanying drawings. In the drawings:
Fig. 1 shows a cryogenic swivel comprising conducting elements interconnecting top and bottom end of the inner swivel ring,
Fig. 2 shows a cross-section of the swivel of Fig. 1 on an enlarged scale,
Fig. 3 shows a swivel with equally spaced insulation support flanges,
Figs. 4 and 5 show a side view and a bottom view of a swivel comprising an insulation box,
Fig. 6 shows a swivel stack of cryogenic swivels according to the invention, and
Fig. 7 shows a swivel stack of figure 6, in which cryogenic fluid is pumped via a closed loop through the swivels in the stack in between two loading and/or offloading operations.

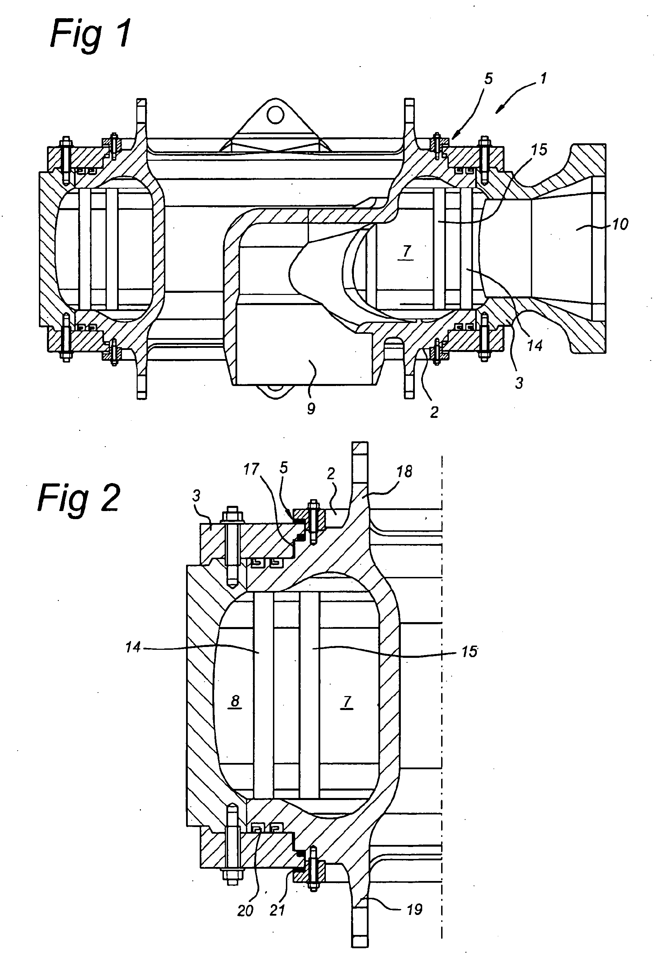

Figure 1 shows a cryogenic swivel 1, with an inner ring 2 and an outer ring 3. The rings 2, 3 are concentric and are mutually connected in a rotatable manner via a cryogenic slide or roller bearing 5. The inner ring 2 defines a relatively large C-shaped chamber 7 which is in fluid connection with a fluid outlet 9 as a first duct. The chamber 8 of the outer ring 3 is of smaller cross-section than the inner chamber 7 and connects to a fluid inlet 10 as a second duct. A number of temperature distribution members 14, 15 extend in a vertical direction between the top wall and the bottom wall of the inner chamber in order to provide a even temperature distribution between these wall parts. The members 14, 15 are generally rod-shaped elements.

As can be seen in Fig. 2, the inner and outer rings 2,3 are mutually rotatably connected via and L-shaped bushing 17. The chambers 7,8 are sealed via product seals 20 of the face seal type, and an environment seal 21 prevents ingress of water, or other materials from the environment into the gap between the inner and outer rings 2,3. Via external insulation flanges 18,19, the swivel 1 can be connected to other swivels or to a swivel support in an insulated manner.

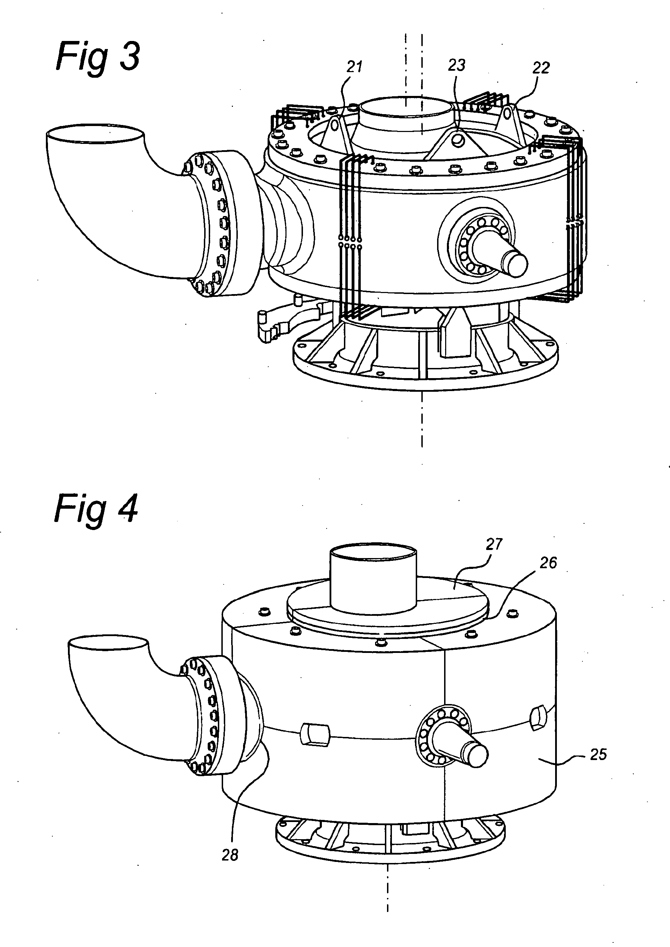

In Figure 3 it is shown that the inner swivel part is provided with equally distributed isolation support flanges 21, 22, 23, vertically projecting from the swivel. The isolation flanges can be used to support the cryogenic swivels on top of each other or connect the cryogenic swivel to a support construction, for example on the offloading tower. At least 3 isolation flanges are needed to create a stable support in a horizontal plane.

The isolation support flanges of the swivel are also subject to large temperature differences and are connected to a receiving U-shaped flange 23 of a support plate 24 which will normally be at ambient temperature. The connection between the isolation flange 21, 22, 23 and the receiving flange 23 is such that it allows for contraction and expansion of one of the parts without losing the alignment of the support plate and the swivel. One solution is to have a small gap between the isolation flange and the receiving flange that allows the isolation flange to contract -expand and are connected to each other via a bushing. At least 3 isolation flanges connected to a receiving flange are needed to created a stable support in a horizontal plane.

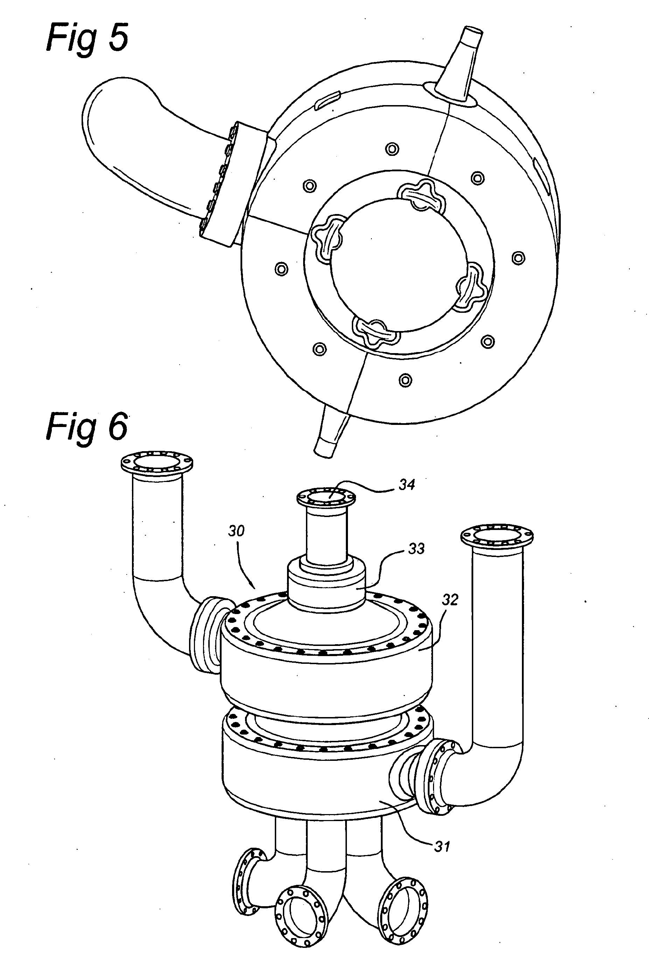

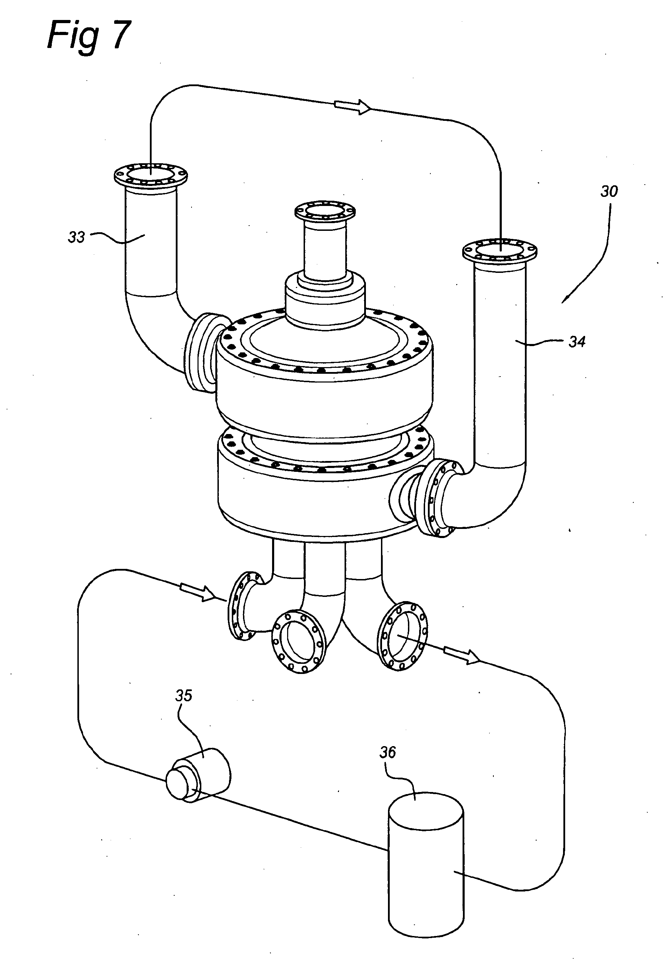

In figures 4 and 5 a swivel insulation box 25 or cold box is shown which encloses the cryogenic swivel completely and keeps the swivel at an overall constant low temperature during start up, operation and ending of the LNG transfer process. The insulation box 25 can rotate via a leaving 26 and connects to a fixed cover plate 27. The insulation box 25 protects the swivel against local temperature differences, which are created by the environment, for example when winds or rain are acting on one side of the swivel. Also when there is no loading or offloading of LNG, the box insulates the swivels as in this stand-by mode the swivel is kept cold by pumping LNG in a closed loop through the swivel (see also figure 7).

The insulation box 25 consists of the insulation cover plate 27 and a box enclosing the outer swivel part and is provided internally with an insulation material. The insulation cover plate 27 has pipe openings 28 which can be split to be added or removed from the fixed pipes that are connected to the outlets of the swivel inner rings. The cover plate 27 can be provided with layers of insulating material. This cover plate is fixed to the fixed piping of for example an LNG import tower.

The insulation box cover plate is rotatably or slidably connected to the rest of the insulation box which encloses and insulates the rotatable outer swivel part of the cryogenic swivel.

The insulation box rotates with the outer swivel rings and can be made of several parts so it can be added to or removed from an already installed cryogenic swivel, for example for inspection or maintenance reasons (see figure 4). The insulation box can be made to include one swivel (pipe or toroidal) or more than one swivel and even a complete small LNG swivel stack of the type as shown in figure 6.

Figure 6 shows a possible multiple cryogenic swivel stack 30 which, for example, can be placed on an offshore LNG offloading tower and which enables quick offloading of a LNG carrier moored to the tower. In this stack the bottom toroidal swivel 31 is dedicated to the transfer of LNG. The second toroidal swivel 32 can also be dedicated to LNG transfer or function as spare swivel or as vapour return swivel. The cryogenic pipe swivel is placed at the centre line of the toroidal cryogenic swivel (s) and is attached to a cold boil-off gas vapour return line 34.

The use of a second (or more) toroidal cryogenic swivel 32 is advantageous from a redundancy point of view; if one of the swivels is not functioning properly, the cold fluid flow can be directed over the "spare" cryogenic swivel. Also the use of more than one cryogenic swivel is advantageous for the efficiency of the offloading system as it enlarge the trough-put of the offloading system, so that a LNG carrier can be unloaded in less time. It is preferred to have the cryogenic toroidal swivels connected to each other via the isolation flanges 21, 22, 23 of figure 3. This configuration eases the change out of one of the swivels for repair purposes. Alternatively a cryogenic swivel stack can be made of one inner core with two (or more) fluid paths or chambers and an outer swivel rings for each fluid path.

A cryogenic swivel stack can consists of for example 2 or 3 cryogenic toroidal swivels with a 16 inch or 20 inch chamber diameter.

Figure 7 shows the cryogenic swivel stack of Figure 6 in a stand-by mode for example between two LNG offloads. A closed cryogenic circulation loop is created by connecting the inlets 33, 34 or outlets of one or more cryogenic swivels 31, 32 and LNG or another cold medium coming from a small buffer vessel is pumped via a pump 35 and LNG buffer tank 36 through the swivels to keep them at a low temperature. This is advantageous as normally the controlled cooling down or warming up of a swivel and attached piping is a critical and time consuming process. The closed loop can be made in a reverse way as shown in figure 6 and can includes one, all or just some swivels of a cryogenic swivel stack placed within or without a swivel insulation box It will be further understood by a person skilled in the art that the swivel or swivel-stack can be placed up-side down placed, that the cryogenic fluid direction can be reversed.

## Claims

1. Cryogenic swivel (1) comprising inner (2) and outer (3) concentric annular walls defining a toroidal chamber between said walls, at least the inner wall (2) being of generally C-shaped cross-section having an internal vertical distance between an upper and a lower substantially horizontal wall part, first and second fluid ducts (9,10) connected to respective openings in generally vertically oriented wall parts of the inner and outer walls respectively, wherein the thickness of the inner (2) and outer (3) walls is several times smaller than the vertical distance, **characterized by** means of fixed conducting elements (14,15) extending from the upper to the lower substantially horizontal wall part of the C-shaped wall inside the toroidal chamber.

2. Cryogenic swivel (1), according to claim 1, the inner (2) and outer (3) annular walls defining a contact surface which comprises a horizontal gap section with at least one sealing element (20), a connection member being on one side attached to the outer wall, extending along the inner wall to define the horizontal gap section, and comprising a transverse part extending along a transverse part op the inner annular wall defming an adjacent vertical gap section, an L-shaped slide element (17) being comprised in an end part of the horizontal gap section and in at least a part of the vertical gap section.

3. Cryogenic swivel (1) according to claim 1 or 2, wherein a chamber part (7) defined by the inner annular wall (2) is larger in volume than a chamber part (8) defined by the outer annular wall (3).

4. Cryogenic swivel (1) according to any of the preceding claims, at least three support members (21,22,23) being connected to the inner annular wall, at a top and/or bottom side of the swivel, extending in an direction of a longitudinal centreline.

5. Cryogenic swivel (1) according to any of the preceding claims, the swivel comprising an insulation cover (25), having a fixed part connected to the inner or outer concentric annular walls at a top and/or bottom surface and a rotatable part fixed to the outer wall.

6. Cryogenic swivel (1) according to claim 5, wherein the outer insulation cover (25) is made up from at least two detachable parts.

7. Cryogenic swivel (1) according to any of the preceding claims comprising at least two swivels (31,32) mutually connected via respective support members.

8. Cryogenic swivel according to any of the preceding claims, comprising a cryogenic pipe swivel at the centre line.

9. Cryogenic swivel (1) according to any of the preceding claims, comprising at least two swivels (31,32) each having an inlet and an outlet, the outlets interconnectable via a cryogenic duct, one of the inlets being connectable to an outflow end of a cryogenic pump, the other of the inlets being connectable to an inflow end of the cryogenic pump

## Patentansprüche

1. Kryodrehgelenk (1), aufweisend
eine innere (2) und äußere (3) konzentrische ringförmige Wand, die zwischen sich eine torusförmige Kammer definieren, wobei zumindest die innere Wand (2) einen allgemein C-förmigen Querschnitt mit einem inneren vertikalen Abstand zwischen einem oberen und einem unteren im Wesentlichen horizontalen Wandabschnitt aufweist,
ersten und zweiten Fluidkanal (9,10), die mit jeweiligen Öffnungen in allgemein vertikal orientierten Wandabschnitten der inneren bzw. äußeren Wand verbunden sind,
wobei die Dicke der inneren (2) und äußeren (3) Wand mehrere Male kleiner ist als der vertikale Abstand,
**gekennzeichnet durch** befestigte Leitungselemente (14,15), die sich von dem oberen zu dem unteren im Wesentlichen horizontalen Wandabschnitt der C-förmigen Wand innerhalb der torusförmigen Kammer erstrecken.

2. Kryodrehgelenk (1) nach Anspruch 1, wobei die innere (2) und äußere ringförmige (3) Wand eine Kontaktoberfläche definieren, die einen horizontalen Spaltabschnitt mit mindestens einem Dichtungselement (20) aufweist, wobei ein sich entlang der inneren Wand erstreckendes Verbindungselement mit einer Seite an der äußeren Wand angebracht ist, um den horizontalen Spaltabschnitt zu definieren, und einen sich entlang eines transversalen Abschnitts der inneren ringförmigen Wand erstreckenden transversalen Abschnitt aufweist, der einen angrenzenden vertikalen Spaltabschnitt definiert, wobei ein L-förmiges Gleitelement (17) in einem Endabschnitt des horizontalen Spaltabschnitts und in mindestens einem Teil des vertikalen Spaltabschnitts enthalten ist.

3. Kryodrehgelenk (1) nach Anspruch 1 oder 2, wobei ein durch die innere ringförmige Wand (2) definierter Kammerabschnitt (7) ein größeres Volumen hat als ein durch die äußere ringförmige Wand (3) definierter Kammerabschnitt (8).

4. Kryodrehgelenk (1) nach einem der vorstehenden Ansprüche, wobei mindestens drei sich in eine Richtung einer längsverlaufenden Mittellinie erstreckende Trägerelemente (21,22,23) mit der inneren ringförmigen Wand an einer oberen und/oder unteren Seite des Drehgelenks verbunden sind.

5. Kryodrehgelenk (1) nach einem der vorstehenden Ansprüche, wobei das Drehgelenk eine Isolationsabdeckung (25) aufweist, die einen befestigten Teil, der an einer oberen und/oder unteren Oberfläche mit der inneren oder äußeren konzentrischen ringförmigen Wand verbunden ist, und einen an der äußeren Wand befestigten drehbaren Teil aufweist.

6. Kryodrehgelenk (1) nach Anspruch 5, wobei die äußere Isolationsabdeckung (25) aus mindestens zwei abnehmbaren Teilen gebildet ist.

7. Kryodrehgelenk (1) nach einem der vorstehenden Ansprüche, aufweisend mindestens zwei Drehgelenke (31,32), die über jeweilige Trägerelemente miteinander verbunden sind.

8. Kryodrehgelenk nach einem der vorstehenden Ansprüche, aufweisend ein Kryorohr-Drehgelenk an der Mittellinie.

9. Kryodrehgelenk (1) nach einem der vorstehenden Ansprüche, aufweisend mindestens zwei Drehgelenke (31,32) mit jeweils einem Einlass und einem Auslass, wobei die Auslässe über einen Kryokanal miteinander verbindbar sind, wobei einer der Einlässe mit einem Auslassende einer Kryopumpe verbindbar ist, der andere der Einlässe mit einem Einlassende der Kryopumpe verbindbar ist.

## Revendications

1. Pivot cryogénique (1) comprenant des parois annulaires concentriques interne (2) et externe (3) délimitant une chambre toroïdale entre lesdites parois, au moins la paroi interne (2) étant de forme générale de section transversale en C présentant une distance verticale interne entre une partie de paroi supérieure et une partie de paroi inférieure sensiblement horizontales, un premier et un second conduits pour liquides (9, 10) raccordés respectivement à des ouvertures situées dans des parties de paroi orientées de manière sensiblement verticales des parois interne et externe, dans lequel l'épaisseur des parois interne (2) et externe (3) est plusieurs fois inférieure à la distance verticale, **caractérisé par** des moyens formés d'éléments conducteurs fixes (14, 15) s'étendant depuis la partie de paroi sensiblement horizontale supérieure jusqu'à la partie de paroi sensiblement horizontale de la paroi conformée en C à l'intérieur de la chambre toroïdale.

2. Pivot cryogénique (1) selon la revendication 1, les parois annulaires interne (2) et externe (3) délimitant une surface de contact qui comporte une section de recouvrement horizontale avec au moins un élément d'étanchéité (20), un élément de raccordement étant fixé d'un côté à la paroi externe, se prolongeant le long de la paroi interne pour délimiter la section de recouvrement horizontale, et comportant une partie transversale se prolongeant le long d'une partie transversale de la paroi annulaire interne délimitant une section de recouvrement verticale adjacente, un élément à glissière (17) conformé en L étant logé dans une partie d'extrémité de la section de recouvrement horizontale et dans au moins une partie de la section de recouvrement verticale.

3. Pivot cryogénique (1) selon la revendication 1 ou 2, dans lequel une partie de chambre (7) délimitée par la paroi annulaire interne (2) présente un volume supérieur à celui d'une partie de chambre (8) délimitée par la paroi annulaire externe (3).

4. Pivot cryogénique (1) selon l'une quelconque des revendications précédentes, dans lequel au moins trois éléments porteurs (21, 22, 23) sont raccordés à la paroi annulaire interne, sur une face de dessus et/ou de dessous du pivot, et s'étendant dans la direction d'une ligne centrale longitudinale.

5. Pivot cryogénique (1) selon l'une quelconque des revendications précédentes, le pivot comportant un habillage d'isolation (25), comportant une partie fixe raccordée aux parois annulaires concentriques interne ou externe au niveau d'une face de dessus et/ou de dessous et une partie pivotante fixée à la paroi externe.

6. Pivot cryogénique (1) selon la revendication 5, dans lequel l'habillage d'isolation externe (25) se compose d'au moins de deux parties détachables.

7. Pivot cryogénique (1) selon l'une quelconque des revendications précédentes, comportant au moins deux pivots (31, 32) mutuellement raccordés par l'intermédiaire des éléments porteurs respectifs.

8. Pivot cryogénique (1) selon l'une quelconque des revendications précédentes, comportant un pivot tubulaire cryogénique au niveau de la ligne centrale.

9. Pivot cryogénique (1) selon l'une quelconque des revendications précédentes, comportant au moins deux pivots (31, 32) comportant chacun une entrée et une sortie, les sorties pouvant être raccordées par l'intermédiaire d'un conduit cryogénique, une des entrées pouvant être raccordée à une extrémité de sortie d'une pompe cryogénique, l'autre des entrées pouvant être raccordée à une extrémité d'admission de la pompe cryogénique.
